# EUROPÄISCHE PATENTSCHRIFT

(11) **EP 0 360 921 B1**
(45) Veröffentlichungstag und Bekanntmachung des Hinweises auf die Patenterteilung: **15.02.1995**
(21) Anmeldenummer: 88116237.4
(22) Anmeldetag: 30.09.1988
(51) Int. Cl.: G06F 13/12

(54) **Verfahren zur Steuerung der Datenübertragung einer Zentraleinheiten-Anschlusssteuerungsschaltung und Schaltungsanordnung zur Durchführung desVerfahrens**
Method to control the data transfer of a connection control circuit for central units, and circuitry to carry out this method
Méthode de commande du transfert de données d'un circuit de commande de connexion pour unité centrales et dispositif pour exécuter ce procédé

(43) Veröffentlichungstag der Anmeldung: 04.04.1990
(73) Patentinhaber: Siemens Nixdorf Informationssysteme Aktiengesellschaft, 33102 Paderborn (DE)
(72) Erfinder: Max, Rüdiger, D-8011 Zorneding (DE)
(74) Vertreter: Fuchs, Franz-Josef, Dr.-Ing.

(56) Entgegenhaltungen:
- EP-A- 0 045 438
- EP-A- 0 260 693
- FR-A- 2 070 355
- COMPUTER DESIGN, Band 18, Nr. 4, April 1979, Seiten 83-91; R.F. BINDER:"Designing a microprocessor driven multipurpose peripheral controller"

## Beschreibung

Die Erfindung betrifft ein Verfahren zur Steuerung der Datenübertragung gemäß den Merkmalen des Oberbegriffs des Anspruchs 1 und eine Schaltungsanordnung zur Durchführung des Verfahrens.

Bei der Datenübertragung zwischen einer Zentraleinheit und einer Datenübertragungsprozessoreinheit werden mikroprozessorgesteuerte Zentraleinheiten-Anschlußsteuerungsschaltungen eingesetzt, um Zentraleinheiten-Befehle (z.B. Read, Write), die über eine Kanalschnittstelle der Zentraleinheit an die Zentraleinheiten-Anschlußsteuerungsschaltung ausgegeben werden, so schnell wie möglich anzunehmen und auszuführen. Die Firmware der die Zentraleinheiten-Anschlußsteuerungsschaltung steuernden Mikroprozessoreinheit steuert dabei nicht nur die Zentraleinheiten-Kanalschnittstelle, sondern auch die Schnittstelle zur Datenübertragungsprozessoreinheit. Da die Zentraleinheit höchste Priorität genießt, muß, wenn irgend möglich, die Firmware der Mikroprozessoreinheit der Zentraleinheiten-Anschlußsteuerungsschaltung auf die Zentraleinheit-Anforderungen sofort reagieren. Die Firmware der Mikroprozessoreinheit erfährt hierdurch häufig völlig asynchron zu laufenden Befehlsausführungen Unterbrechungen, um die Abläufe an der Zentraleinheiten-Kanalschnittstelle zu steuern. Problematisch dabei ist, daß es Firmware-Sequenzen gibt, die nicht unterbrochen werden dürfen. Arbeitet die Zentraleinheit mit mehreren Geräteadressen quasi gleichzeitig, müssen zusätzlich laufend zeitaufwendige Adressumschaltungsvorgänge von der Firmware der Mikroprozessoreinheit gesteuert werden. Wird gefordert, daß die Zentraleinheit unter Echtzeitbedingungen bedient wird, gerät die Firmware mehr und mehr in Schwierigkeiten, beide Schnittstellen ausreichend schnell zu bearbeiten. Die Kanalschnittstelle der Zentraleinheit würde zwangsläufig länger als nötig belegt bleiben und wäre damit für zusätzlich angeschlossene peripheriegeräte nicht nutzbar.

Aus der PCT-Anmeldung WO 86/05293 ist eine mikroprozessorgesteuerte Zentraleinheiten-Anschlußsteuerungsschaltung bekannt, die die Datenübertragung von einer Zentraleinheit zu mehreren verschiedenen peripheren Geräten gestattet. Sie weist einen mit der Zentraleinheiten-Kanalschnittstelle verbundenen Eingangsschaltungsteil und zwei Ausgangsschaltungsteile auf, von denen der eine den Datenaustausch zu einem Druckergerät und der andere zu wenigstens einem Bandgerät steuert. Der Eingangsschaltungsteil wird je nach bedarf jeweils einem der Ausgangsschaltungsteile zugeordnet. Falls beide Ausgangsschaltungsteile gleichzeitig auf den Eingangsschaltungsteil zugreifen wollen, entscheidet eine Schiedseinrichtung, welche Ausgangsschaltung die Eingangsschaltung zugeteilt bekommt. In diesem Fall kann die Datenübertragung nur verzögert durchgeführt werden. Dabei ist eine Datenübertragung im Burstmodus möglich. Ziel der bekannten Zentraleinheiten-Anschlußsteuerungsschaltung ist es, eine Datenübertragung zwischen einer Zentraleinheit und mehreren peripheren Geräten mit möglichst wenigen Zentraleinheiten-Unterbrechungen durchzuführen.

Aus der Schrift EP-A-0 260 693 ist ein Verfahren zur Steuerung der Datenübertragung zwischen einer Zentraleinheit und einer Datenübertragungsprozessoreinheit unter Verwendung einer zwischengeschalteten mikroprozessorgesteuerten Zentraleinheiten-Anschlußsteuerungsschaltung mit einer Zwischenspeichereinheit, mit einer paketweise aus der Zwischenspeichereinheit auslesenden Mikroprozessoreinheit und mit je einer Schnittstellenschaltung für den Datenübertragungsprozessor- und die Zentraleinheit bekannt. Dabei ist ein interner Prozessorbus verwendet, der eine Schnittstelle zwischen der Eingangs- und der Ausgangsseite der Zentraleinheiten-Anschlußsteuerungsschaltung bildet. Die Zugangsberechtigung von Seiten der Zentraleinheit beziehungsweise von Seiten der Mikroprozessoreinheit auf den internen Prozessorbus wird mit einer mit einem ROM realisierten kombinatorischen Logik gesteuert. Eine Trennung in der Zentraleinheiten-Anschlußsteuerungsschaltung bezüglich der Abläufe an der Eingangsseite und bezüglich der Abläufe an der Ausgangsseite ist nicht realisiert. Hatte beispielsweise die Eingangsseite die Zugriffsberechtigung und konnten dadurch in die Zwischenspeichereinheit Informationen geschrieben werden, erhält im Anschluß daran die Ausgangsseite die Zugriffsberechtigung und es kann die Mikroprozessoreinheit die Informationen aus der Zwischenspeichereinheit auslesen. Ein unabhängiges Arbeiten auf der Eingangs- und auf der Ausgangsseite der Zentraleinheiten-Anschlußsteuerschaltung ist nicht möglich.

Neben den Zentraleinheiten-Anschlußsteuerungsschaltungen sind auch Schaltwerke bekannt (Tietze/Schenk, Halbleiterschaltungstechnik, 4. Auflage, 1978, Springer-Verlag, Seite 457). Schaltwerke bestehen danach aus einem kombinatorischen Teil, dem Schaltnetz, und einem Zustandsspeicher, in dem für einen Zeittakt der Systemzustand gespeichert wird. Dabei hängt der neue Systemzustand jeweils vom alten Systemzustand und den Eingangsvariablen ab.

Die Ausgangsvariablen des Schaltwerks hängen von dessen Eingangsvariablen und dem alten Systemzustand ab. Die Reihenfolge der Systemzustände kann durch die Wahl der Eingangsvariablen und des alten Systemzustandes bestimmt werden.

Aufgabe der Erfindung ist es, ein Verfahren und eine Schaltungsanordnung zur Steuerung der Datenübertragung zwischen einer Zentraleinheit und einer Datenübertragungsprozessoreinheit unter Verwendung einer zwischengeschalteten mikroprozessorgesteuerten Zentraleinheiten-Anschlußsteuerungsschaltung anzugeben, bei denen die Bedienung der Zentraleinheiten-Kanalschnittstelle unter Echtzeitbedingungen, und die Bedienung der Datenübertragungsprozessor-Kanalschnittstelle mit der die Zentraleinheiten-Anschlußsteuerungsschaltung steuernden Mikroprozessoreinheit eigenen Verarbeitungsgeschwindigkeit möglich ist.

Gelöst wird diese Aufgabe für das Verfahren durch die im kennzeichnenden Teil des Anspruchs 1 angegebenen Merkmale. Das ROM-Schnittstellensteuerwerk entlastet die die Zentraleinheiten-Anschlußsteuerungsschaltung steuernde Mikroprozessoreinheit, indem es anstelle der Mikroprozessoreinheit die Zentraleinheiten-Kanalschnittstelle steuert. Durch das ROM-Schnittstellensteuerwerk werden die asynchronen Ereignisse an der Zentraleinheiten-Kanalschnittstelle von den Firmwareabläufen der Zentraleinheiten-Anschlußsteuerungsschaltung entkoppelt. Das ROM-Schnittstellensteuerwerk und, infolge der Entlastung durch das ROM-Schnittstellensteuerwerk, die Mikroprozessoreinheit sind dabei so schnell, daß die Zentraleinheiten-Kanalschnittstelle bzw. die Zentraleinheit unter Echtzeitbedingungen bedient werden kann. Dies ist selbst dann möglich, wenn die Zentraleinheit quasi gleichzeitig mit mehreren Geräteadressen arbeitet. Eine Steigerung des Datendurchsatzes bei der Datenübertragung wird erreicht, wenn die Datenübertragung im Mehrbyte-Burstmodus durchgeführt wird.

Die Schaltungsanordnung zur Durchführung des Verfahrens weist die im kennzeichnenden Teil des Anspruchs 3 angegebenen Merkmale auf. Die darin verwendete FIFO-Befehlsspeichereinheit vereinfacht die Speicherverwaltung für die von der Zentraleinheit gesendeten und in der FIFO-Befehlsspeichereinheit zwischengespeicherten Befehlsinformationen.

Nachfolgend wird ein Ausführungsbeispiel der Erfindung anhand der Zeichnung näher erläutert.

Es zeigen:
- FIG 1: eine zwischen einer Zentraleinheit und einer Datenübertragungsprozessoreinheit angeordnete Zentraleinheiten-Anschlußsteuerungsschaltung gemäß der Erfindung in Blockdarstellung,
- FIG 2: ein den prinzipiellen Arbeitsablauf der Mikroprozessoreinheit der Zentraleinheiten-Anschlußsteuerungsschaltung nach FIG 1 zeigendes Flußdiagramm und
- FIG 3: eine Tabelle aufeinanderfolgender Arbeitsschritte mit jeweiliger Zuordnung der Schaltungskomponenten der Zentraleinheiten-Anschlußsteuerungsschaltung nach FIG 1.

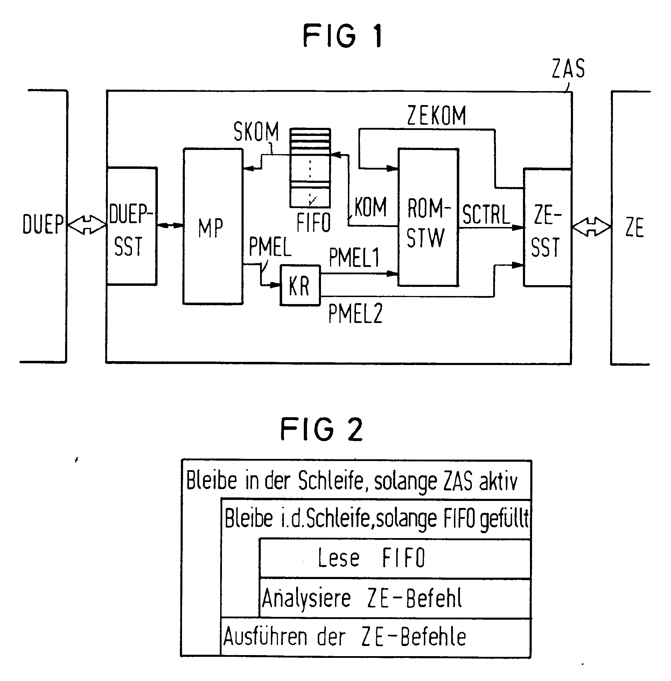

Die FIG 1 zeigt eine Zentraleinheiten-Anschlußsteuerungsschaltung ZAS, die zwischen einer Datenübertragungsprozessoreinheit DUEP und einer Zentraleinheit ZE angeordnet ist. Die Zentraleinheiten-Anschlußsteuerungsschaltung ZAS weist in Richtung Datenübertragungsprozessoreinheit DUEP eine an sich bekannte Datenübertragungsprozessor-Schnittstellenschaltung DUEP-SST und in Richtung Zentraleinheit ZE eine an sich bekannte Zentraleinheiten-Schnittstellenschaltung ZE-SST auf. Die beiden Schnittstellenschaltungen DUEP-SST und ZE-SST steuern die Signale auf den Übertragungsleitungen zu den angeschlossenen benachbarten Einheiten. Innerhalb der Zentraleinheiten-Anschlußsteuerungsschaltung ZAS wird die Zentraleinheiten-Schnittstellenschaltung ZE-SST mittels eines ROM-Schnittstellensteuerwerks ROM-STW und die Datenübertragungs-Schnittstellenschaltung DUEP-SST mittels der die Zentraleinheiten-Anschlußsteuerungsschaltung ZAS insgesamt steuernden Mikroprozessoreinheit MP gesteuert. Zwischen dem ROM-Schnittstellensteuerwerk ROM-STW und der Mikroprozessoreinheit MP ist eine FIFO-Befehlsspeichereinheit FIFO und eine Kontrollregistereinheit KR angeordnet. Die FIFO-Befehlsspeichereinheit FIFO wird von dem ROM-Schnittstellensteuerwerk ROM-STW beschrieben und von der Mikroprozessoreinheit MP immer wieder ausgelesen (Polling). Die Kontrollregistereinheit KR dient der Mikroprozessoreinheit MP zur Übergabe von Rückmeldungen an das ROM-Schnittstellensteuerwerk ROM-STW und an die Zentraleinheiten-Schnittstellenschaltung ZE-SST. Die Mikroprozessoreinheit MP ist somit von der Zentraleinheiten-Schnittstellenschaltung ZE-SST entkoppelt. Sie greift selbst nicht auf diese Schnittstellenschaltung zu. Alle die Zentraleinheiten-Schnittstellenschaltung ZE-SST betreffenden Steuerungsvorgänge werden von dem ROM-Schnittstellensteuerwerk ROM-STW ausgeführt.

Die Mikroprozessoreinheit MP teilt dem ROM-Schnittstellensteuerwerk ROM-STW über Meldungen mit (z.B. Read-Befehl ohne Fehler ausgeführt), welche Aktivitäten zur Zentraleinheit erforderlich sind. Die hierzu formulierten Prozessormeldungen werden über die Prozessormeldeleitungen PMEL der Kontrollregistereinheit KR übergeben, die über die Prozessorrückmeldeleitungen PMEL1 eine Anforderung zur Übergabe einer Zentraleinheiten-Meldung an das ROM-Schnittstellensteuerwerk ROM-STW weiterleitet. Die Zentraleinheiten-Meldungen selbst werden über die Prozessorrückmeldeleitungen PMEL2 an die Zentraleinheiten-Kanalschnittstelle ZE-SST weitergeleitet. Für das ROM-Schnittstellensteuerwerk ROM-STW sind die Meldeinhalte transparent, d.h. die Meldungen auf den Prozessorrückmeldeleitungen PMEL2 werden vom ROM-Schnittstellensteuerwerk ROM-STW nicht ausgewertet. Das ROM-Schnittstellensteuerwerk ROM-STW setzt aber diese Meldungen in Signalablaufe und Meldungen an der Zentraleinheiten-Kanalschnittstelle ZE-SST um. Quasi simultan zu diesen Abläufen kann das ROM-Schnittstellensteuerwerk ROM-STW aber Befehle für andere Zentraleinheiten-Geräteadressen der Zentraleinheiten-Anschlußsteuerungsschaltung ZAS entgegennehmen, ohne die Mikroprozessoreinheit MP zu unterbrechen. Bei den Meldungen kann es sich z.B. um die Quittierung einer vorangegangenen Aktivität oder um die Aufforderung handeln, mit einer vorgegebenen Steuersequenz in Richtung Zentraleinheit ZE zu beginnen.

In umgekehrter Richtung werden alle von der Zentraleinheit ZE gesendeten Befehle über die Zentraleinheiten-Kommandoleitungen ZEKOM zunächst dem ROM-Schnittstellensteuerwerk ROM-STW übergeben. Das ROM-Schnittstellensteuerwerk ROM-STW dekodiert die Befehle und reicht sie über die Kommandoleitungen KOM an die FIFO-Befehlsspeichereinheit FIFO weiter, wo sie zwischengespeichert werden. Die Mikroprozessoreinheit MP überwacht das Eintreffen der Befehle durch fortwährendes Abfragen der FIFO-Befehlsspeichereinheit FIFO (Polling), falls in dieser noch keine Befehle zwischengespeichert sind. Treffen Befehle ein oder sind Befehle schon zwischengespeichert, werden diese über die Speicherkommandoleitungen SKOM von der Mikroprozessoreinheit MP ausgelesen, analysiert und in der Reihenfolge ihrer Prioritäten ausgeführt. Nach der Ausführung eines Befehls sieht die Mikroprozessoreinheit MP wieder nach, ob zwischenzeitlich neue Befehle zwichengespeichert wurden. Dabei verfährt sie wieder in der oben beschriebenen Weise.

Der prinzipielle Arbeitsablauf der Mikroprozessoreinheit MP ist in FIG 2 als Flußdiagramm dargestellt. Der Arbeitsablauf setzt sich im wesentlichen aus einer inneren und einer äußeren Schleife zusammen. In der äußeren Schleife verharrt die Mikroprozessoreinheit MP solange, solange die Zentraleinheiten-Anschlußsteuerungsschaltung ZAS aktiv ist. Die innere Schleife gibt den bereits beschriebenen Arbeitsablauf der Mikroprozessoreinheit MP wieder. Wenn auch nicht explizit angegeben, so ist doch klar, daß Aussprünge aus dem Arbeitsablauf möglich sind, um z.B. auf übergeordnete Ereignisse reagieren zu können.

Zum Beispiel müssen das Zentraleinheiten-Reset-Kommando oder das Interface-Disconnect-Kommando sofort abgehandelt werden können.

Die Zentraleinheit ZE kann quasi gleichzeitig mit mehreren, beispielsweise acht, Geräteadressen arbeiten. Mittels einer entsprechenden Softwaresteuerung in der Zentraleinheit ZE können je Geräteadresse maximal zwei Befehle gleichzeitig an der FIFO-Befehlsspeichereinheit FIFO anstehen, wobei der anstehende Befehl vom nachfolgenden Befehl vorzeitig beendet werden soll. Die FIFO-Befehlsspeichereinheit FIFO benötigt deshalb nur zweimal acht Speicherplätze für die möglicherweise sechzehn gleichzeitig anstehenden Befehle, ohne daß eine Gefahr des Überlaufs besteht. Beim Versuch, mehr als zwei Befehle je Geräteadresse abzusetzen, meldet sich das ROM-Schnittstellensteuerwerk ROM-STW über die Steuerwerkssteuerleitung SCTRL und blockt weitere Befehlsausgaben seitens der Zentraleinheit ZE ab, indem sich das ROM-Schnittstellensteuerwerk ROM-STW in den Belegt-Zustand schaltet.

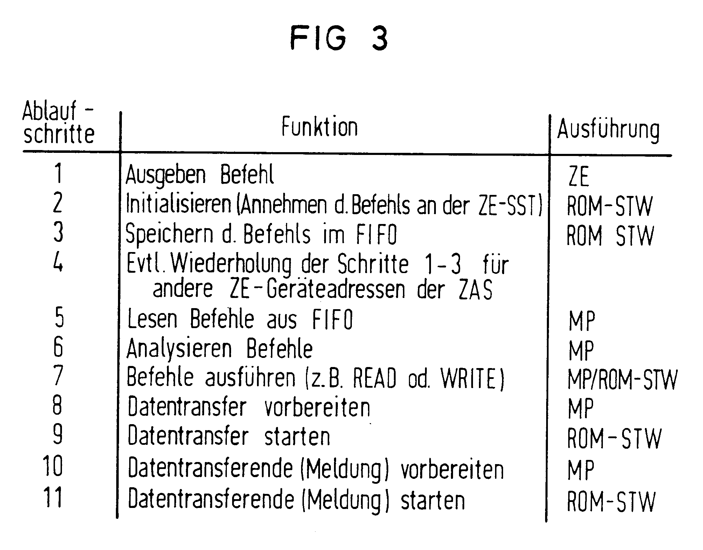

FIG 3 zeigt eine Tabelle, in der das Wechselspiel zwischen der Zentraleinheit ZE, dem ROM-Schnittstellensteuerwerk ROM-STW und der Mikroprozessoreinheit MP bei der Ausgabe eines Lese- oder Schreib-Befehls durch die Zentraleinheit ZE in den wesentlichen Schritten angegeben ist. Die Tatsache, daß die Zentraleinheit ZE einen Befehl ausgeben möchte, erkennt das ROM-Schnittstellensteuerwerk ROM-STW anhand einer von ihm überwachten Signalsequenz, die an der Zentraleinheiten-Kanalschnittstelle ZE-SST abläuft. Nach dem Erkennen einer solchen Sequenz startet das ROM-Schnittstellensteuerwerk ROM-STW eine Signalsequenz, die in FIG 3 mit "Initialisieren" umschrieben ist. Darin quittiert das ROM-Schnittstellensteuerwerk ROM-STW den Wunsch, daß die Zentraleinheit ZE einen Befehl ausgeben möchte, teilt den eigenen augenblicklichen Zustand mit und gibt die Aufforderung aus, den Befehl zu übergeben. Nachdem die Zentraleinheit ZE den Befehl an das ROM-Schnittstellensteuerwerk ROM-STW übergeben hat, erfolgt dessen Dekodierung. Anschließend wird er in die FIFO-Befehlsspeichereinheit FIFO geschrieben.

Eventuell erfolgt eine Wiederholung der bisher beschriebenen Schritte für andere Zentraleinheiten-Geräteadressen der Zentraleinheiten-Anschlußsteuerungsschaltung ZAS.

Die Mikroprozessoreinheit MP hat von den Steuerungsabläufen an der Zentraleinheiten-Kanalschnittstelle ZE-SST nichts gemerkt. Im Rahmen der fortlaufenden periodischen Abfragen der FIFO-Befehlsspeichereinheit FIFO stellt die Mikroprozessoreinheit MP fest, daß ein Befehl zwischengespeichert ist, woraufhin sie den Befehl ausliest. Sind während der letzten Befehlsausführungsphase mehrere Befehle ausgegeben worden, können mehr als dieser eine Befehl in der FIFO-Befehlsspeichereinheit FIFO stehen. In diesem Fall liest die Mikroprozessoreinheit MP alle zwischengespeicherten Befehle in einem Paket aus.

Nach dem Auslesen des oder der Befehle durch die Mikroprozessoreinheit MP analysiert sie den oder die Befehle und bereitet die Befehlsausführung vor, indem sie z.B. den Empfänger und den Sender der Datenübertragung ermittelt und die Adreßzeiger für die DMA-Datenübertragung lädt. Bei der Befehlsausführung wechseln sich die Mikroprozessoreinheit MP und das ROM-Schnittstellensteuerwerk ROM-STW ab.

Die Datenübertragung wird vom ROM-Schnittstellensteuerwerk ROM-STW aus gestartet. Während der Datenübertragung wird die Zentraleinheiten-Schnittstellenschaltung ZE-SST vom ROM-Schnittstellensteuerwerk ROM-STW gesteuert. Beispielsweise werden die Signale "Service-In" und "Service-Out" vom ROM-Schnittstellensteuerwerk ROM-STW gesetzt.

Die Beendigung eines Zentraleinheiten-Befehls wird wieder von der Mikroprozessoreinheit MP vorbereitet, während das Starten der Beendigung (Meldungsübergabe) wieder durch das ROM-Schnittstellensteuerwerk ROM-STW geschieht.

Im Burstmodus werden von der Zentraleinheiten-Anschlußsteuerungsschaltung ZAS mehrere Datenbytes oder ein ganzer Datenblock übertragen. Die Zentraleinheiten-Kanalschnittstelle ZE-SST ist während dieser Zeit belegt.

Im 16-Byte-Burstmodus werden von der Zentraleinheiten-Anschlußsteuerungsschaltung ZAS jeweils maximal 16 Datenbytes im Burstmodus übertragen und danach die Datenübertragung unterbrochen, um den Kanal für andere Steuerungen freizumachen.

Der 16-Byte-Burstmodus gestattet gegenüber dem Bytemultiplexmodus die Übertragung von Daten mit einer höheren Datenrate. Im Bytemultiplexmodus ist die Zeit zwischen zwei REQUEST in der Zentraleinheiten-Anschlußsteuerungsschaltung ZAS zur Übertragung von Datenbytes so kurz, daß die Zentraleinheiten-Kanalschnittstelle ZE-SST während der Datenübertragung für keine andere Steuerung freigemacht wird. Die Zentraleinheiten-Kanalschnittstelle ZE-SST benötigt aber eine längere Pause um einen neuen Befehl an der Zentraleinheiten-Kanalschnittstelle ZE-SST zu starten. Sie ist damit im Bytemultiplexbetrieb bei schlechterer Datenrate genauso belegt, wie im Burstmodus. Durch die Datenübertragung im Mehrbyte-Burstmodus wird deshalb gegenüber einer herkömmlichen Bytemultiplexübertragung bei gleichzeitiger Bedienung der Zentraleinheit ZE unter Echtzeitbedingungen ein höherer Datendurchsatz erzielt.

Das ROM-Schnittstellensteuerwerk ROM-STW ist so realisiert, daß es sieben Entscheidungsvariable, sechzehn Steuervariable und zweihundert interne Zustände aufweist. Die Entscheidungsvariablen werden von den über die Zentraleinheiten-Kommandoleitungen ZEKOM und Prozessorrückmeldeleitungen PMEL1 übertragenen Signalen gebildet, während die Steuervariablen von den über die Kommandoleitungen KOM und die Steuerwerkssteuerleitungen SCTRL übertragenen Signalen gebildet werden. Auf Grund der Komplexität des ROM-Schnittstellensteuerwerks ROM-STW ist dessen Entwicklung unter Zuhilfenahme eines CAD-Verfahrens realisiert.

## Patentansprüche

1. Verfahren zur Steuerung der Datenübertragung zwischen einer Zentraleinheit (ZE) und einer Datenübertragungsprozessoreinheit (DUEP) unter Verwendung einer zwischengeschalteten mikroprozessorgesteuerten Zentraleinheiten-Anschlußsteuerungsschaltung (ZAS) mit einer Zwischenspeichereinheit (FIFO), mit einer paketweise aus der Zwischenspeichereinheit (FIFO) auslesenden Mikroprozessoreinheit (MP) und mit je einer Schnittstellenschaltung für den Datenübertragungsprozessor- und die Zentraleinheit (DUEP-SST, ZE-SST),
**dadurch gekennzeichnet**, daß sämtliche Zugriffe auf die Zentraleinheiten-Schnittstellenschaltung (ZE-SST) ausschließlich von einem ROM-Schnittstellensteuerwerk (ROM-STW) durchgeführt werden, daß dabei die von der Zentraleinheit (ZE) gesendeten Befehle vom ROM-Schnittstellensteuerwerk (ROM-STW) dekodiert und anschließend in der Zwischenspeichereinheit (FIFO) zwischengespeichert werden, daß unabhängig von der Steuerung der Zugriffe auf die Zentraleinheiten-Schnittstellenschaltung (ZE-SST) fortwährend das Eintreffen von Befehlen in der Zwischenspeichereinheit (FIFO) von der Mikroprozessoreinheit (MP) durch laufende Abfragen überwacht wird und bei eingetroffenen Befehlen diese analysiert und nach Prioritäten geordnet nacheinander abgearbeitet werden, und daß Steueranweisungen an das ROM-Schnittstellensteuerwerk (ROM-STW) seitens der die Zentraleinheiten-Anschlußsteuerungsschaltung (ZAS) steuernden Mikroprozessoreinheit (MP) ebenfalls zwischengespeichert werden.

2. Verfahren nach Anspruch 1,
**dadurch gekennzeichnet**, daß die Datenübertragung zwischen der Zentraleinheit (ZE) und dem ROM-Schnittstellensteuerwerk (ROM-STW) im Mehrbyte-Burstmodus durchgeführt wird.

3. Mikroprozessorgesteuerte Zentraleinheiten-Anschlußsteuerungsschaltung zur Durchführung des Verfahrens nach einem der vorherigen Ansprüche,
**dadurch gekennzeichnet**, daß zwischen der die Zentraleinheiten-Anschlußsteuerungsschaltung (ZAS) steuernden Mikroprozessoreinheit (MP) und der Zentraleinheiten-Schnittstellenschaltung (ZE-SST) ein ROM-Schnittstellensteuerwerk (ROM-STW) mit einer FIFO-Befehlsspeichereinheit (FIFO) und einer Kontrollregistereinheit (KR) derart angeordnet ist, daß die Zentraleinheiten-Schnittstellenschaltung (ZE-SST) über Zentraleinheiten-Kommandoleitungen (ZEKOM) mit dem ROM-Schnittstellensteuerwerk (ROM-STW), das ROM-Schnittstellensteuerwerk (ROM-STW) einerseits über Steuerwerkssteuerleitungen (SCTRL) mit der Zentraleinheiten-Schnittstellenschaltung (ZE-SST) und andererseits über Kommandoleitungen (KOM) mit der FIFO-Befehlsspeichereinheit (FIFO), die FIFO-Befehlsspeichereinheit (FIFO) über Speicherkommandoleitungen (SKOM) mit der Mikroprozessoreinheit (MP), die Mikroprozessoreinheit (MP) über Prozessormeldeleitungen (PMEL) mit der Kontrollregistereinheit (KR) und die Kontrollregistereinheit (KR) über Prozessorrückmeldeleitungen (PMEL1, PMEL2) sowohl mit dem ROM-Schnittstellensteuerwerk (ROM-STW) als auch mit der Zentraleinheiten-Schnittstellenschaltung (ZE-SST) verbunden sind.

## Claims

1. Method for controlling the data transfer between a central unit (ZE) and a data transfer processor unit (DUEP) using an interposed microprocessor-controlled central unit interface control circuit (ZAS) having a buffer unit (FIFO), having a microprocessor unit (MP) that reads packet-by-packet out of the buffer unit (FIFO), and having one interface circuit each for the data transfer processor unit and the central unit (DUEP-SST, ZE-SST), characterized in that all accesses to the central unit interface circuit (ZE-SST) are carried out solely by a ROM interface controller (ROM-STW), in that the instructions sent from the central unit (ZE) are decoded here by the ROM interface controller (ROM-STW) and subsequently buffered in the buffer unit (FIFO), in that independently of the control of the accesses to the central unit interface circuit (ZE-SST), the arrival of instructions in the buffer unit (FIFO) is constantly monitored by the microprocessor unit (MP) by means of continual interrogations, and if instructions arrive, they are analysed and, ordered according to priorities, successively processed, and in that control statements to the ROM interface controller (ROM-STW) on the part of the microprocessor unit (MP) controlling the central unit interface control circuit (ZAS) are likewise buffered.

2. Method according to Claim 1, characterized in that the data transfer between the central unit (ZE) and the ROM interface controller (ROM-STW) is carried out in a multi-byte burst mode.

3. Microprocessor-controlled central unit interface control circuit for carrying out the method according to one of the preceding claims, characterized in that a ROM interface controller (ROM-STW) having a FIFO instruction memory unit (FIFO) and a control register unit (KR) is arranged between the microprocessor unit (MP) controlling the central unit interface control circuit (ZAS) and the central unit interface circuit (ZE-SST) in such a way that the central unit interface circuit (ZE-SST) is connected to the ROM interface controller (ROM-STW) via central unit command lines (ZEKOM), the ROM interface controller (ROM-STW) is connected on the one hand to the central unit interface circuit (ZE-SST) via controller control lines (SCTRL) and on the other hand to the FIFO instruction memory unit (FIFO) via command lines (KOM), the FIFO instruction memory unit (FIFO) is connected to the microprocessor unit (MP) via memory command lines (SKOM), the microprocessor unit (MP) is connected to the control register unit (KR) via processor message lines (PMEL), and the control register unit (KR) is connected both to the ROM interface controller (ROM-STW) and to the central unit interface circuit (ZE-SST) via processor feedback lines (PMEL1, PMEL2).

## Revendications

1. Procédé pour commander la transmission de données entre une unité centrale (ZE) et une unité à processeur de transmission de données (DUEP) moyennant l'utilisation d'un circuit intercalé (ZAS) de commande de raccordement de l'unité centrale, commandé par un microprocesseur et comportant une unité de mémoire intermédiaire (FIFO), une unité à microprocesseur (MP) qui effectue une lecture sous la forme de paquets à partir de l'unité de mémoire intermédiaire (FIFO), et un circuit d'interface respectif pour l'unité à processeur de transmission de données et l'unité centrale (UEP-SFP, ZE-SST),
caractérisé par le fait
que tous les accès au circuit d'interface (ZE-SST) de raccordement de l'unité centrale sont exécutés exclusivement par une unité de commande d'interface (ROM-SW) de raccordement d'une mémoire ROM, que les instructions, qui sont émises par l'unité centrale (ZE) sont décodées par l'unité de commande d'interface (ROM-STW) de raccordement de la mémoire ROM et sont ensuite mémorisées temporairement dans l'unité de mémoire intermédiaire (FIFO),
qu'indépendamment de la commande des accès au circuit d'interface (ZE-SST) de raccordement de l'unité centrale, l'arrivée d'instructions dans l'unité de mémoire intermédiaire (FIFO) est contrôlée en permanence par l'unité à microprocesseur (MP) au moyen d'une interrogation continue et que, lorsque des instructions arrivent, ces instructions sont analysées et traitées successivement dans l'ordre des priorités, et que des instructions de commande envoyées à l'unité de commande d'interface (ROM-STW) de raccordement de la mémoire ROM du côté de l'unité à microprocesseur (MP) commandant le circuit (ZAS) de commande de raccordement de l'unité centrale sont également mémorisées temporairement.

2. Procédé suivant la revendication 1, caractérisé par le fait que la transmission de données entre l'unité centrale (ZE) et l'unité de commande d'interface (ROM-STW) de raccordement de la mémoire ROM est réalisée selon un mode en rafales de plusieurs octets.

3. Circuit de commande de raccordement d'une unité centrale, commandé par un microprocesseur, pour l'exécution du procédé suivant l'une des revendications précédentes, caractérisé par le fait qu'entre l'unité à microprocesseur (MP), qui commande le circuit (ZAS) de commande de raccordement de l'unité centrale, et le circuit d'interface (ZE-SST) de liaison de l'unité centrale est disposée une unité de commande d'interface (ROM-STW) de raccordement de l'unité ROM équipée d'une unité de mémoire d'instructions FIFO (FIFO) et d'une unité de registre de contrôle (KR) de telle sorte que le circuit d'interface (ZE-SST) de raccordement de l'unité centrale est relié par l'intermédiaire de lignes (ZEKOM) de transmission d'ordres de l'unité centrale à une unité de commande d'interface (ROM-STW) de raccordement de la mémoire ROM, que l'unité de commande d'interface (ROM-STW) de raccordement de la mémoire ROM est reliée d'une part par l'intermédiaire de lignes (SCTRL) de commande de l'unité de commande au circuit d'interface (ZE-SST) de raccordement de l'unité centrale et d'autre part par l'intermédiaire de lignes de transmission de commande (KOM) à l'unité de mémoire d'instructions FIFO (FIFO), que l'unité de mémoire d'instructions FIFO (FIFO) est reliée par l'intermédiaire de lignes (SKOM) de transmission d'ordres de mémoire à l'unité à microprocesseur (MP), que l'unité à microprocesseur (MP) est reliée par l'intermédiaire de lignes (PMEL) de signalisation de processeur à l'unité de registre de contrôle (KR) et que l'unité de registre de contrôle (KR) est reliée par l'intermédiaire de lignes (PMEL1, PMEL2) de signalisation en retour de processeur aussi bien à l'unité de commande d'interface (ROM-STW) de raccordement de la mémoire ROM qu'au circuit d'interface (ZE-SST) de liaison de l'unité centrale.
